# NEUE EUROPÄISCHE PATENTSCHRIFT

(11) **EP 1 170 079 B2**
(45) Veröffentlichungstag und Bekanntmachung des Hinweises auf die Entscheidung über den Einspruch: **06.10.2010**
(45) Hinweis auf die Patenterteilung: 05.10.2005
(21) Anmeldenummer: 01107531.4
(22) Anmeldetag: 26.03.2001
(51) Int. Cl.: B23B 31/12

(54) **Bohrfutter**
Drill chuck
Mandrin à forer

(30) Priorität: 03.07.2000 EP 00113184
(43) Veröffentlichungstag der Anmeldung: 09.01.2002
(60) Teilanmeldung: 05001895.1
(73) Patentinhaber: Röhm GmbH, 89567 Sontheim (DE)
(72) Erfinder: Röhm, Günter Horst, 89567 Sontheim (DE)
(74) Vertreter: Hentrich, Swen

(56) Entgegenhaltungen:
- EP-A- 0 598 176
- EP-A- 1 029 621
- EP-A1- 1 029 621
- DE-A- 4 419 825
- GB-A- 1 584 327
- US- - 4 930 793
- US- - 5 145 193
- US- - 5 215 317
- US- - 5 261 679
- US- - 5 816 582
- US- - 5 829 761
- US- - 5 957 469
- US-A- 5 765 839

## Beschreibung

Die Erfindung betrifft ein Bohrfutter mit einem an einer Bohrspindel anschließbaren Futterkörper, mit zwischen sich eine Aufnahme für das Bohrwerkzeug bildenden Spannbacken, die in geneigt zur Futterachse verlaufenden Führungsaufnahmen zum Öffnen und Schließen des Bohrfutters durch einen am Futterkörper drehbar und axial unverschiebbar geführten Gewindering verstellbar sind, und mit einer der Verstellung der Spannbacken durch Verdrehung des Gewinderings dienenden Spannhülse.

Ein derartiges Bohrfutter ist aus der EP 0 785 041 A1 bekannt, bei dem die Spannhülse zweiteilig mit einem äußeren metallenen Mantel und einem inneren, aus Kunststoff gefertigten Mantel gebildet ist. Dabei dient der äußere Mantel dazu, eine gegen Beschädigungen unempfindliche und widerstandsfähige Außenfläche bereitzustellen, so daß Beschädigungen im Bohrbetrieb oder durch Ansetzen einer Zange zum Drehen der Spannhülse weitgehend vermieden werden, während der innere, aus Kunststoff bestehende Mantel dazu vorgesehen ist, zur Ausbildung einer Steuerkurve geformt zu werden, die der Betätigung einer die Verdrehung des Gewinderinges verhindernden bzw freigebenden Sperreinrichtung dient. Die Formung der Steuerkurve ist im Spritzgußverfahren leicht möglich, mit dem auch komplizierte Gestaltungen gefertigt werden können. Dieses bekannte Bohrfutter vermeidet den Nachteil, die Steuerkurve von innen heraus durch spanende Bearbeitung herstellen zu müssen, was nur unter hohen Material-, Kosten- und Zeitaufwand möglich wäre.

Der Erfindung liegt die Aufgabe zugrunde, ein Bohrfutter der eingangs genannten Art so auszubilden, daß dessen Montage vereinfacht sowie die Belastung der Spannhülse im Bohrbetrieb verringert wird.

Die der Erfindung zugrunde liegende Aufgabe wird bei einem Bohrfutter der eingangs genannten Art dadurch gelöst, daß die Spannhülse im Bereich axial hinter dem Gewindering, also auf der der Bohrspindel zugewandten Seite, an einer mit dem Futterkörper verbundenen, eine Federwirkung vermittelnden Abschlußscheibe axial gesichert ist, wobei die Abschlussscheibe als Abschluss der Spannhülse angeordnet ist.

Dieses erfindungsgemäße Bohrfutter bietet den Vorteil, daß die Spannhülse in einfacher Weise auf den Futterkörper aufgesteckt werden und durch die Abschlußscheibe gesichert werden kann, so daß die axiale Sicherung der Spannhülse am axial rückwärtigen Bereich erfolgt und für diese Sicherung im Mittenbereich und am axial vorderen Ende des Futterkörpers kein Platz bereitgestellt werden muß, der für andere Bauteile frei bleibt. Zusätzlich läßt sich durch diese Art der axialen Sicherung der Abschlußscheibe auch eine gefederte Lagerung der Spannhülse realisieren, die eine Dämpfung der beim Antreiben der Bohrspindel auftretenden und auf die Spannhülse übertragenen Vibrationen bewirkt, was zum eine als angenehm empfunden wird, wenn der Nutzer zum Spannen bzw Lösen des Werkzeugs die Spannhülse mit der Hand ergreift und festhält. Darüber hinaus treten auch Vorteile im Bohrbetrieb auf, da eine Zentrierung der Spannhülse bewirkt wird. Schließlich ist es auch günstig, daß bei der motorischen Verstellung der Spannbacken in ihre rückwärtige Extremposition einer Klemmung der Spannbacken mit ihren Zahnreihen in dem Gewinde des Gewinderinges entgegengewirkt wird, da der mit der Spannhülse verbundene Gewindering gleichfalls von der Federwirkung profitiert. Für eine möglichst einfache Montage ist es vorteilhaft, wenn die Abschlußscheibe im Bereich des rückwärtigen Ringendes der Spannhülse in eine an der Spannhülse ausgebildeten Nut eingreift.

Die Vorteile der Erfindung treten besonders deutlich hervor, wenn die Spannhülse den Futterkörper bis zu dessen ruckwärtigem Ende überdeckt, und wenn die Abschlußscheibe am rückwärtigen Ende des Futterkörpers fixiert ist. Bei dieser Ausführungsform sind die Platzvorteile aufgrund der Lage der Abschlußscheibe besonders deutlich.

Für einen sichereren Kontakt der Abschlußscheibe mit der Spannhülse ist vorgesehen, daß an der Abschlußscheibe ein Scheibenbund angeformt ist.

Wenn der Scheibenbund durch Bundsegmente gebildet ist, dann wird auf diese einfache Weise die erwünschte Federwirkung erreicht, da die Steifigkeit der Abschlußscheibe durch die Einteilung in Bundsegmente reduziert ist und zugleich sowohl eine Federwirkung in radialer als auch axialer Richtung erzielt. Dabei wird die radiale Federwirkung zum einen zur Montage, zum anderen zur Zentrierung ausgenutzt.

Alternativ läßt sich die gewünschte Federwirkung auch erzielen, indem an der Abschlußscheibe radial federnde Zungen ausgebildet sind zum Eingriff in die an der Spannhülse ausgebildeten Nut.

Vorteile für einen störungsfreien Bohrbetrieb und eine lange Lebensdauer des Bohrfutter bieten sich, wenn in der Abschlußscheibe Öffnungen ausgebildet sind. Diese Öffnungen ermöglichen den Austritt von beim Bohrbetrieb auftretenden Bohrstaub, der beim Verbleib im Inneren den Verschleiß erhöhen würde. Bevorzugt ist dabei, wenn die Öffnungen radial benachbart zu den Bundsegmenten angeordnet sind, die aufgrund der Federwirkung ein Verstopfen der Öffnungen verhindert ist. Dies wird auch erreicht, wenn die Öffnungen benachbart zu den Zungen angeordnet sind.

Die Vorteile des erfindungsgemäßen Bohrfutters zeigen sich besonders deutlich, wenn die Spannhülse eine Steuerkurve zur Betätigung einer die Verdrehung des Gewinderinges verhindernden bzw freigebenden Sperreinrichtung aufweist. Die axiale Sicherung der Spannhülse axial hinten am Bohrfutter schafft einen Freiraum zur einfacheren und variableren Anordnung der Sperreinrichtung, deren Funktionen, insbesondere sichere Verriegelung nicht durch Vibrationen gefährdet ist, die aufgrund der Federwirkung weitgehend gedämpft werden.

Es ist vorgesehen, daß die Steuerkurve durch Stege gebildet ist, die von der radial äußeren Seite der aus Metall bestehenden Spannhülse nach innen vorstehen. Dies bietet den Vorteil, daß nicht im Inneren der Spannhülse die Strukturen zur Bildung der Steuerkurve herausgearbeitet werden müssen, sondern daß die Spannhülse von der Außenseite aus bearbeitet werden kann, wobei diese dabei so verformt wird, daß sich auf der Innenseite die Steuerkurve ausbildet.

Dabei ist besonders bevorzugt, wenn die Stege durch die Seitenwände mindestens einer in die Spannhülse eingeprägten Tasche gebildet sind, da die Tasche ein in sich stabiles Gebilde darstellt, das bei der üblichen Beanspruchung bei Verstellung der Spannhülse nicht deformiert wird.

Günstig ist es weiterhin, wenn die in Umfangsrichtung der Spannhülse einander gegenüberliegenden Stege der Taschen zur Betätigung der Sperreinrichtung vorgesehen sind, da so die zur Verstellung der Spannbacken notwendige Drehbewegung genutzt werden kann, um die Sperreinrichtung zu betätigen. Dabei können über den Umfang der Spannhülse verteilt mehrere Taschen vorgesehen sein, die dann auch dazu genutzt werden können, eine Fingerkuppe in diese einzulegen, um so beim Verdrehen der Spannhülse ein großes Drehmoment erzeugen zu können.

Alternativ besteht auch die Möglichkeit, daß die Steuerkurve durch eine Kappe überdeckt ist, wobei zweckmäßigerweise die Kappe durch eine axial am Futterkörper abgestützte Staubschutzkappe gebildet ist.

Um ein sicheres Funktionieren der Sperreinrichtung zu gewährleisten, ist weiterhin vorgesehen, daß die Sperreinrichtung aus einem koaxialen Kranz von Sperrausnehmungen und aus mindestens einem Sperrglied besteht, das unter der Kraft einer Sperrfeder durch die Steuerkurve in die Sperrausnehmungen einrückbar ist, wobei das Sperrglied und die Sperrausnehmungen einander in derart geneigten Flankenflächen anliegen, daß diese den Gewindering in der dem Öffnen des Bohrfutters entsprechenden Drehrichtung gegen Verdrehen sperren und beim Verdrehen in der anderen Drehrichtung das Sperrglied gegen die Kraft der Sperrfeder aus den Sperrausnehmungen herausdrücken, und daß durch eine der in die Spannhülse eingeprägten Taschen ein Schaltnocken zur Federspannung gegeben ist. Vorteilhaft ist dabei, wenn der Gewindering drehfest mit einem koaxialen Zwischenring verbunden ist, der die Sperrfeder und das Sperrglied trägt, und wenn der Zwischenring durch Anschläge begrenzt relativ zur Spannhülse verdrehbar ist.

Bevorzugt ist weiterhin eine Ausführungsform, die dadurch gekennzeichnet ist, daß eine in Umfangsrichtung zwei Raststellungen aufweisende Rasteinrichtung vorgesehen ist, wobei sich das durch einen Rastnocken einer Rastfeder gebildete Rastglied bei dem in die Sperrausnehmungen eingerückten Sperrglied in der einen Raststellung und bei dem ausgerückten Sperrglied in der anderen Raststellung befindet, und daß die Steuerkurve die beiden Raststellungen beinhaltet. Die Rasteinrichtung dient dazu, bei offenem Bohrfutter die gegenseitige Drehmitnahme von Spannhülse und Zwischenring zu sichern und bei geschlossenem Bohrfutter auszuschließen, daß sich im Bohrbetrieb die Spannhülse selbsttätig gegenüber der Zwischenhülse verstellt und so die Sperreinrichtung betätigt. Insbesondere soll die Rasteinrichtung auch sicher stellen, daß bei offenem Bohrfutter der Gewindering von der Spannhülse beim Verdrehen mitgenommen wird, ohne daß das Sperrglied in den eingerückten Zustand verstellt wird.

Da die aus Metall gefertigte Spannhülse eine gegenüber aus Kunststoff bestehenden Spannhülsen eine größere Masse aufweist und bei modernen Bohrmaschinen als Sicherheitseinrichtung eine Spindelstop-Funktion realisiert ist, wird die Sperreinrichtung stärker belastet. Um deren Funktioniere sicherzustellen, ist vorgesehen, daß an der Sperrfeder zwei zum simultanen Eingriff in die Sperrausnehmungen zur gemeinsamen Kraftübertragung vorgesehenen Sperrglieder ausgebildet sind, denen jeweils eine Tasche als Schaltnocken zugeordnet ist.

Weil beide Sperrglieder ihre Funktion nur ausüben können, wenn diese auch in Kontakt zu den als Randverzahnung realisierten Sperrausnehmungen gelangen, ist es zweckmäßig, wenn die Sperrfeder mit einem die Ausrichtung der Sperrglieder gegenüber der Sperrausnehmung ermöglichenden Spiel im Zwischenring angeordnet ist. Alternativ besteht naturgemäß die Möglichkeit, die Elastizität der Feder selber auszunutzen, um ein simultanes Anliegen der Sperrglieder an der Randverzahnung zu erreichen.

Hinsichtlich einer hohen Belastbarkeit der Sperrfeder ist es zweckmäßig, wenn die beiden Sperrglieder an den Enden der Sperrfeder angeordnet sind, wenn das in der dem Öffnen des Bohrfutter entsprechenden Drehrichtung vorn liegende Sperrglied in Richtung Sperrausnehmungen abgekröpft und das andere Sperrglied schleifenförmig gestaltet ist zur Einwirkung auf die zum vorderen Sperrglied übereinstimmende Flankenfläche.

Vorgesehen ist weiterhin, daß die Abschlußscheibe auf ihrer Planseite Verstärkungrippen aufweist, und daß die Verstärkungsrippen mittig innerhalb der Bundsegmente angeordnet sind. Diese Verstärkungsripppen dienen dazu, die Federwirkung genauer auf die gewünschte Größe abzustimmen, insbesondere die Federwirkung in axialer Richtung und radialer Richtung zu modifizieren.

Im folgenden soll die Erfindung an in der Zeichnung dargestellten Ausführungsbeispiele näher erläutert werden; es zeigen:
- Fig. 1: ein Bohrfutter nach der Erfindung, links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II aus Fig. 1, und zwar in der Teilfig. 2.1 im ungesperrten, in der Teilfig. 2.2 im gesperrten Futterzustand,
- Fig. 3: den Schnitt III - III aus Fig. 1,
- Fig. 4: eine der Fig. 2.1 entsprechende Darstellung einer weiteren Ausführungsform,

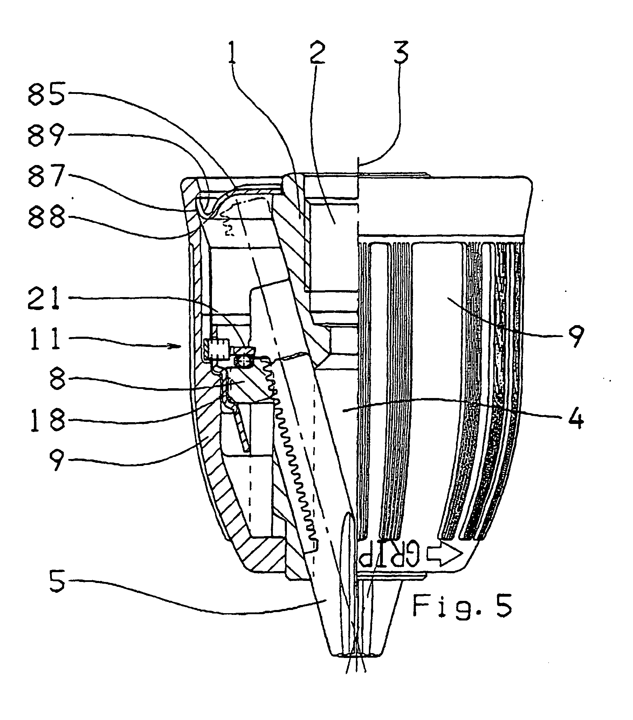

- Fig. 5: eine der Fig. 1 entsprechende Darstellung einer weiteren Ausführungsform,

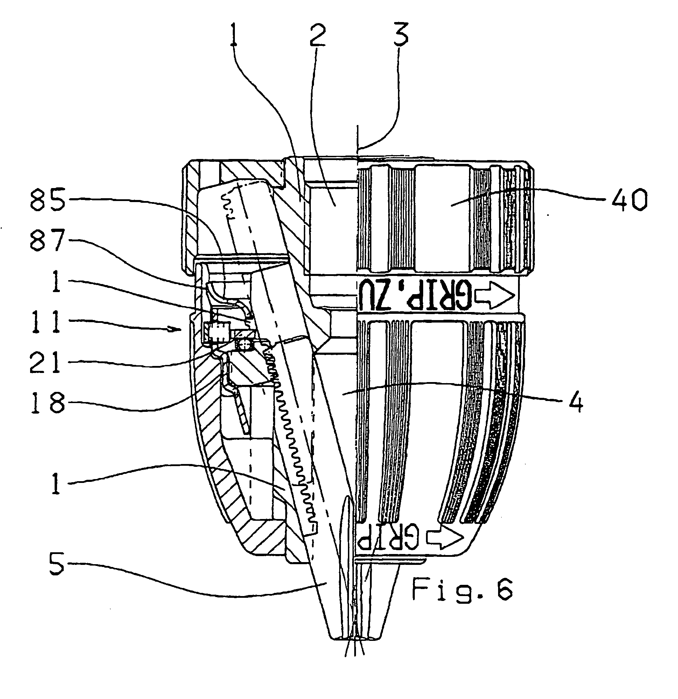

- Fig. 6: eine der Fig. 1 entsprechende Darstellung eines Bohrfutters mit einer axial rückwärtig hinter dem Gewindering angeordneten Abschlußscheibe der Spannhülse sowie mit einer Griffhülse,
- Fig. 7: die Darstellung einer Ausführungsform mit der dem Druckring zugeordneten Sperrverzahnung,
- Fig. 8: den Schnitt VIII - VIII aus Fig. 1,
- Fig. 9: eine der Fig. 1 entsprechende Darstellung einer Ausführungsform mit bis zum axial rückwärtigem Ende des Futterkörpers reichender Spannhülse,
- Fig.10: den Schnitt X - X aus Fig. 9,
- Fig.11: eine der Fig. 1 entsprechende Darstellung einer Ausführungsform mit der gegenüber der Abschlußscheibe eingebördelter Spannhülse,

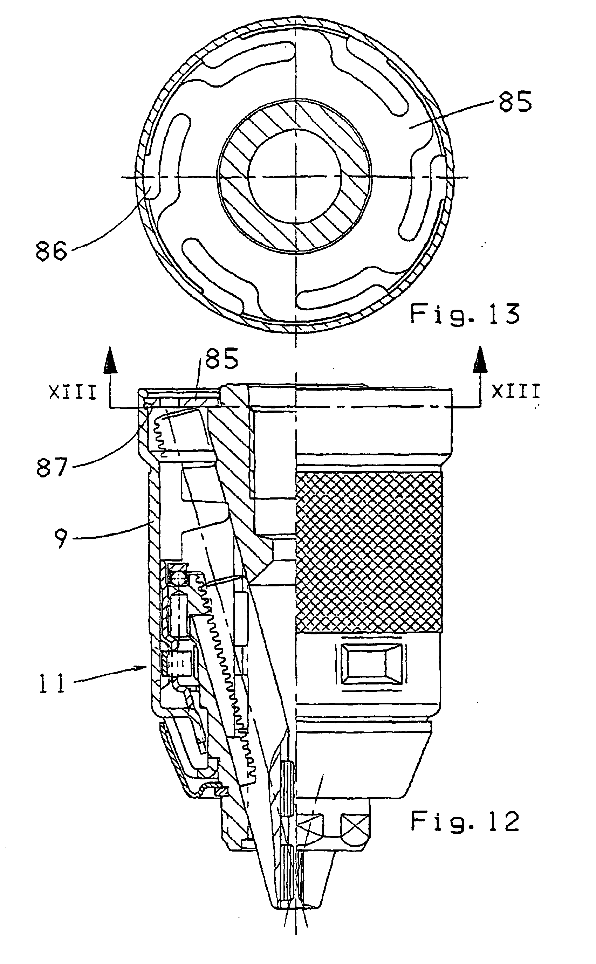

- Fig.12: eine nochmals andere Ausführungsform zur axialen Sicherung der Spannhülse am axial rückwärtige Ende des Futterkörpers,
- Fig.13: den Schnitt XIII - XVIII aus Fig. 12,
- Fig.14: eine der Fig. 2.2 entsprechende Darstellung einer Ausführungsform mit einer Sperrfeder erhöhter Dämpfung,
- Fig.15: eine der Fig. 2.2 entsprechende Darstellung mit einer modifizierten Sperrfeder mit 2 Schaltnoppen,
- Fig.16: eine Fig. 14 entsprechende Darstellung einer Sperrfeder mit 2 Rastgliedern und 2 Schaltnoppen,
- Fig.17: eine Fig. 15 entsprechende Darstellung mit 2 Sperrfedern,
- Fig.18: eine Fig. 15 entsprechende Darstellung mit einer das Sperrglied und einer das Rastglied tragenden Feder,
- Fig.19: eine zu Fig. 18 alternative Ausführungsform,
- Fig.20: eine zu Fig. 18 alternative Ausführungsform mit 3 Feder,
- Fig.21: eine zu Fig. 20 alternative Ausführungsform,
- Fig.22: eine zu Fig. 20 alternative Ausführungsform mit 4 Federn,
- Fig. 23: eine der Fig. 1 entsprechende Darstellung mit einer Verstärkungsrippen aufweisenden Abschlußscheibe,
- Fig. 24: eine Draufsicht auf das Bohrfutter aus Fig. 23.

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel weist der Futterkörper 1 eine Gewindeaufnahme 2 auf, an die sich nach vorn ein axialer Durchgang 80 anschließen kann, um die Schläge eines in der Bohrspindel verschiebbar geführten Schlägers oder Döppers unmittelbar auf das Schaftende des in einer Werkzeugaufnahme 4 gehaltenen Bohrers übertragen zu können. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse 3 verstellbar sind. Die Ausführungsformen zeigen von Hand spannbare Bohrfutter, bei welchen die Spannbacken 5 im Futterkörper 1 geführt und über eine Backenverzahnung 6 mit einem Spanngewinde an einem Gewindering 8 in Eingriff stehen. Zur Verstellung der Spannbacken 5 dient der Gewindering 8, der am Futterkörper 1 axial unverschiebbar und drehbar geführt und axial nach hinten über ein Kugellager 22, gegebenenfalls über einen Druckring 21, am Futterkörper 1 abgestützt ist.

Um unerwünschte Verstellungen der Spannbacken 5 zu verhindern, kann die Drehstellung des Gewinderings 8 fixiert werden. Dazu dient eine allgemein mit 11 bezeichnete und zwischen dem Gewindering 8 und dem Futterkörper 1 ausgebildete Sperreinrichtung, die aus einem koaxialen Kranz von Sperrausnehmungen 10 auf der Seite des Futterkörpers 1 und auf der Seite des Gewinderings 8 aus mindestens einem Sperrglied 12 besteht, das unter der Kraft einer Sperrfeder in die Sperrausnehmungen 10 greift. Dabei liegen das Sperrglied 12 und die es aufnehmenden Sperrausnehmungen 10 einander in derart geneigten Flankenflächen an, daß diese den Gewindering 8 in der dem Öffnen des Bohrfutters entsprechenden Drehrichtung (Pfeil 14) gegen Verdrehen verriegeln, beim Verdrehen des Gewinderings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung 10 zu Sperrausnehmung 10 entlang dem Umfang des Futterkörpers 1 verrutschen lassen. Unter den im Bohrbetrieb auftretenden Schwingungsbeanspruchungen des Bohrfutters bleibt das Bohrfutter aber auch in dieser dem Pfeil 15 entsprechenden Drehrichtung gesperrt. Die für dieses Sperrverhalten unterschiedliche Neigung der Flankenflächen wird auf einfache Weise durch eine sägezahnförmige Gestaltung erreicht, wobei die steilere Flankenfläche der Zahnbrust und die flachere Flankenfläche dem Zahnrücken entspricht.

Das Sperrglied 12 kann zwischen seinen an den Sperrausnehmungen 10 ein- und ausgerückten Zuständen verstellt werden, wozu das Sperrglied 12 durch eine Steuerkurve 35 an einer koaxialen, ebenfalls axial unverschiebbaren Spannhülse 9 verstellbar und entsprechend die Spannhülse 9 relativ zum Gewindering 8 verdrehbar ist. Die Steuerkurve 35 ist durch Stege 81 gebildet, die von der radial äußeren Seite der aus Metall bestehenden Spannhülse 9 nach innen vorstehen und durch eine Bodenplatte 82 verbunden sind, die insbesondere durch die Seitenwände von in die Spannhülse 9 eingeprägten Taschen 83 gebildet sind, wobei eine in die Spannhülse 9 eingeprägte Tasche 83 als Schaltnocken 84 für das Sperrglied 12 fungiert und damit die in Umfangsrichtung der Spannhülse 9 einander gegenüberliegenden Stege der Taschen 83 zur Betätigung der Sperreinrichtung 11 vorgesehen sind.

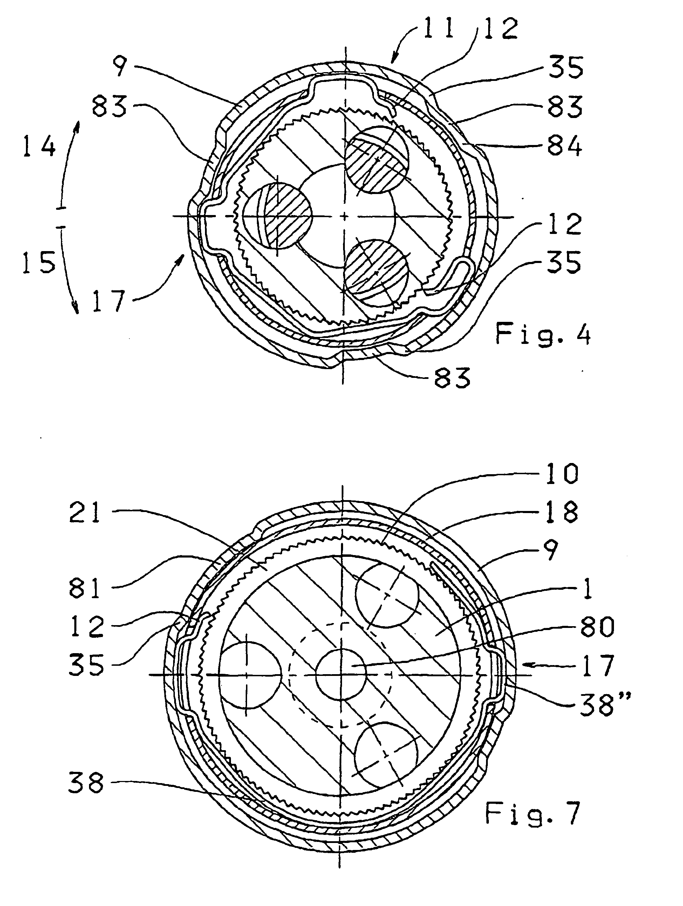

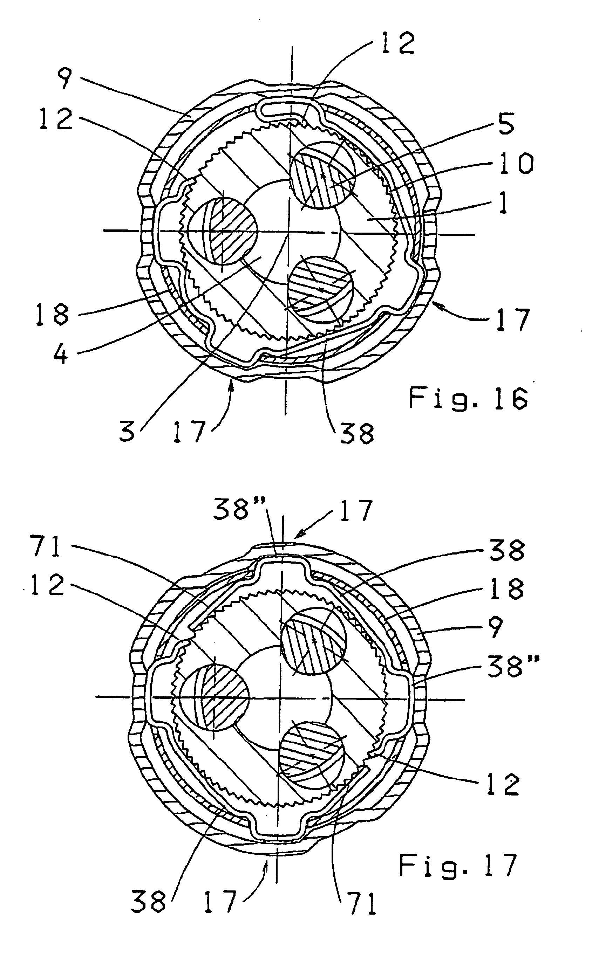

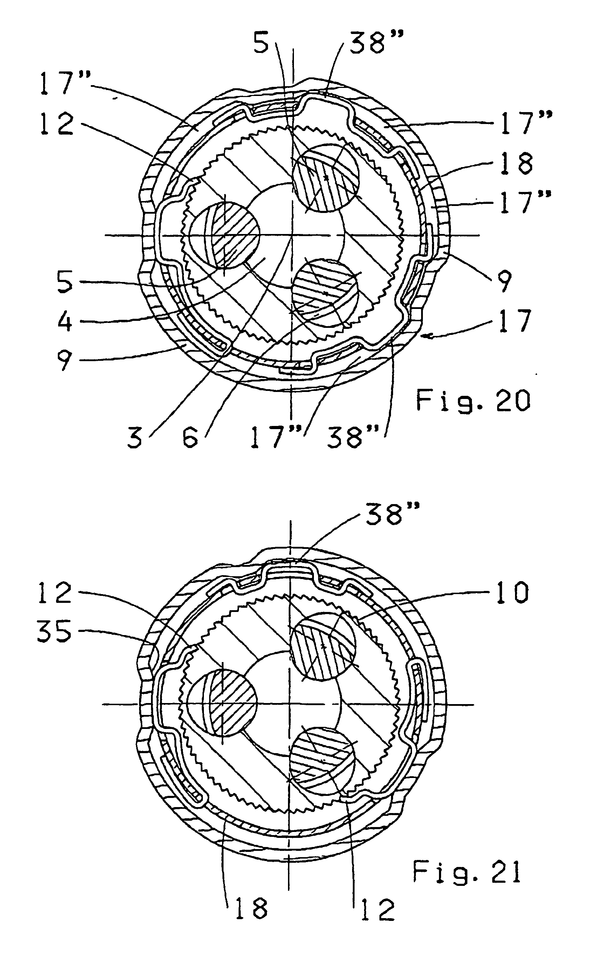

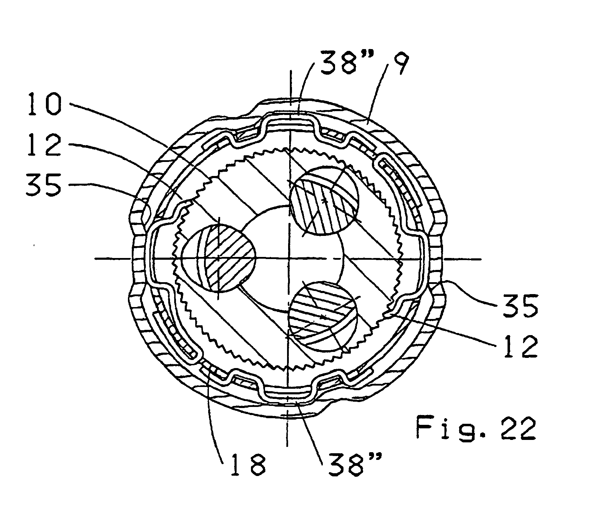

Bei der Ausführungsform gemäß der Fig. 4 sind an der Sperrfeder zwei zum simultanen Eingriff in die Randverzahnung zur gemeinsamen Kraftübertragung vorgesehene Sperrglieder 12 ausgebildet, denen jeweils eine Tasche 83 als Schaltnocken 83 zugeordnet ist, wobei die Sperrfeder mit einem die Ausrichtung der Sperrglieder 12 gegenüber den Sperrausnehmungen 10 ermöglichenden Spiel in einem Zwischenring 18 angeordnet ist. Die beiden Sperrglieder 12 sind an den Enden der Sperrfeder angeordnet, wobei das in der dem Öffnen des Bohrfutter entsprechenden Drehrichtung (Pfeil 14) vorn liegende Sperrglied 12 in Richtung Sperrausnehmungen 10 abgekröpft ist und das andere Sperrglied 12 schleifenförmig gestaltet ist zur Einwirkung auf die zum vorderen Sperrglied 12 übereinstimmende Flankenfläche. Es ist gleichfalls möglich, die beiden Sperrglieder 12 separaten Sperrfedern zuzuordnen. Es ist jeweils eine eigene Tasche 83 als Teil der Steuerkurve 35 zur Verstellung der Sperrglieder 12 vorgesehen (Fig. 17, 21,22).

Die Verdrehung der Spannhülse 9 relativ zum Gewindering 8 ist in beiden Drehrichtungen (Pfeile 14, 15) formschlüssig begrenzt, wozu Anschläge 16', 16" vorgesehen sind. Durch Verdrehen der Spannhülse 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen der Spannhülse 9 in der dem Öffnen des Bohrfutters entsprechenden Drehrichtung (Pfeil 14) aus dem eingerückten Zustand in den ausgerückten Zustand.

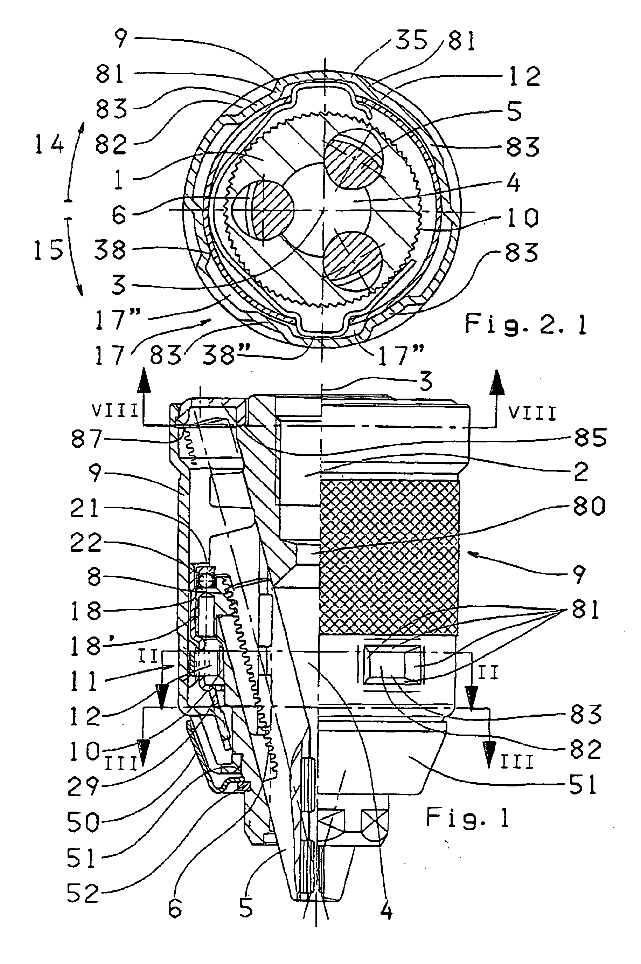

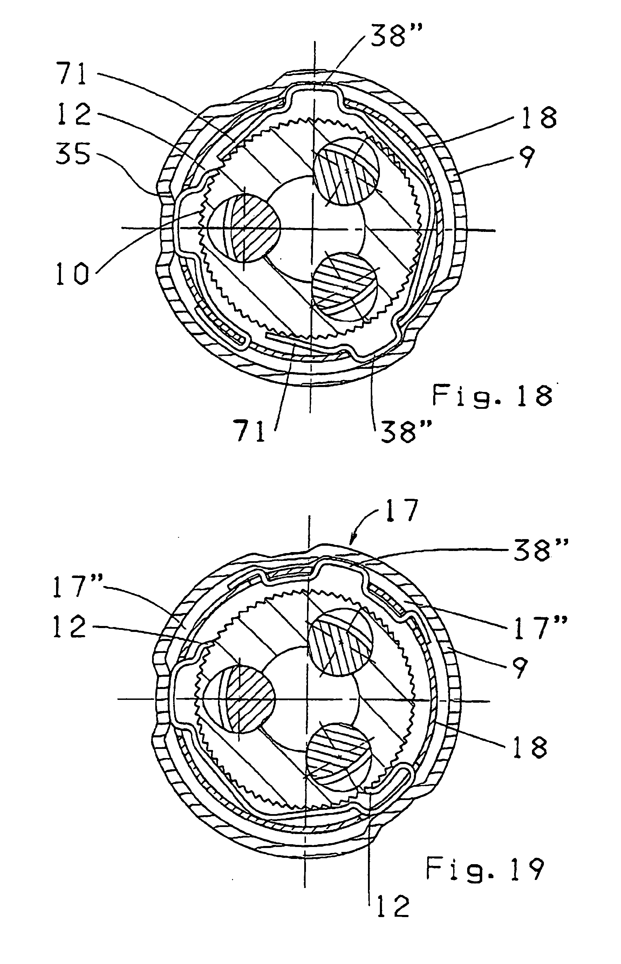

Zwischen der Spannhülse 9 und dem Gewindering 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich des Figurenpaares 2.1 und 2.2 erkennen läßt. Dabei sind die Raststellungen durch den Eingriff eines von der Kraft einer Rastfeder beaufschlagten Rastgliedes 38" auf der Seite des Gewinderings 8 in entsprechend an der Spannhülse 9 angeordnete Rastaufnahmen 17" gebildet, die Teil der Steuerkurve 35 und gleichfalls durch in die Spannhülse 9 eingeprägte Taschen 83 verwirklicht sind. Das Rastglied 38" ist insbesondere durch einen Rastnocken der Rastfeder gebildet. Die Sperrfeder und die Rastfeder sind in den Fig. 2.1, 2.2, 7, 15 und 16 gemeinsam von einem Federbügel 38 gebildet, der sich in Umfangsrichtung längs des Gewinderings 8 erstreckt und drehfest mit dem Gewindering 8 verbunden ist. Der Federbügel 38 kann mehrfach vorgesehen sein (Fig. 17), wodurch auch die Rasteinrichtung 17 mehrfach realisiert ist. Alternativ besteht auch die Möglichkeit einer von dem Sperrglied 12 mit Sperrfeder getrennten Ausbildung der Rasteinrichtung 17, die dann gleichfalls mehrfach und damit redundant vorhanden sein kann (Fig. 18, 20, 22).

Der Gewindering 8 besitzt den eine Führung für die Spannhülse 9 bildenden koaxialen Zwischenring 18, der die gewinderingseitigen Teile der Anschläge 16', 16" für die Spannhülse und außerdem den Federbügel 38 trägt, sowie einen Kragenteil 18' umfaßt, der den das Spanngewinde tragenden Teil des Gewinderings 8 drehfest umschließt. Dabei besteht der das Spanngewinde tragende Teil des Gewinderings 8 aus zwei umfangsmäßig geteilten, nämlich zunächst an jeder Teilung durch eine Bohrung geschwächten und dann gebrochenen Ringhälften, die in einer Ringnut des Futterkörpers 1 gegeneinander zusammengesetzt und durch den Kragenteil 18' am Futterkörper 1 zusammengehalten sind. Selbstverständlich kann aber der Gewindering 8 auch einstückig ausgebildet sein, was jedoch in der Zeichnung nicht weiter dargestellt ist.

In allen Fällen besitzt der Gewindering 8 bzw. Zwischenring 18 zur radialen Führung der Spannhülse 9 eine kreiszylindrische Außenfläche, der die Spannhülse 9 mit einer entsprechend kreiszylindrischen Innenfläche anliegt.

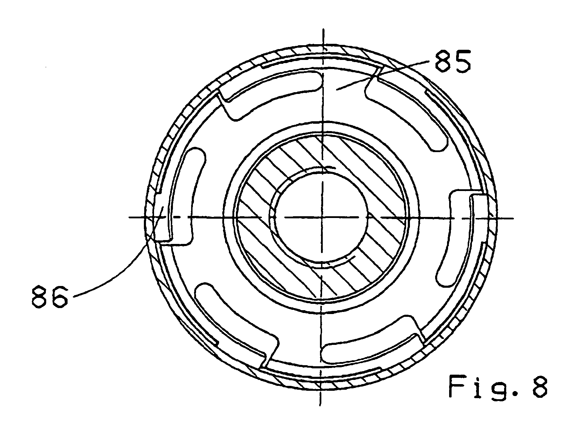

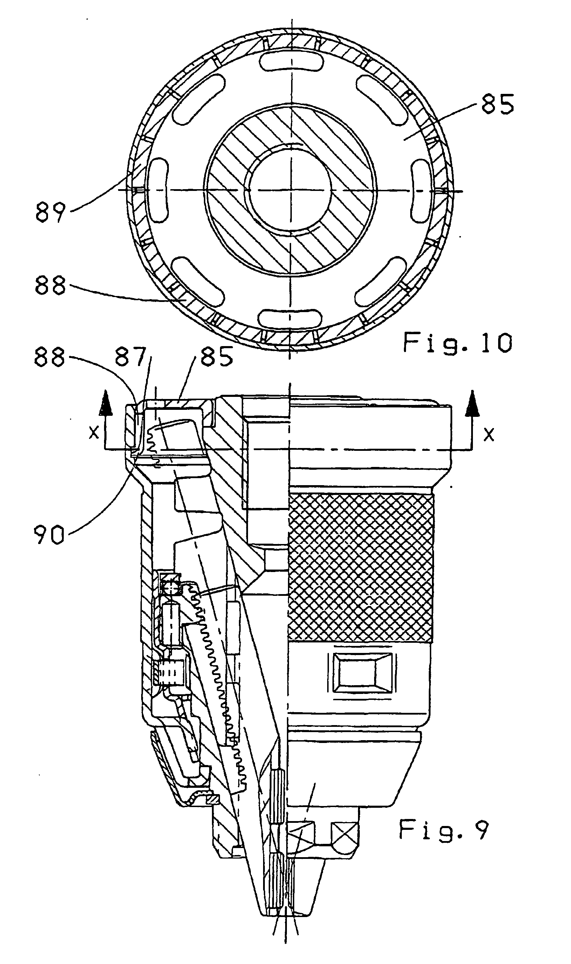

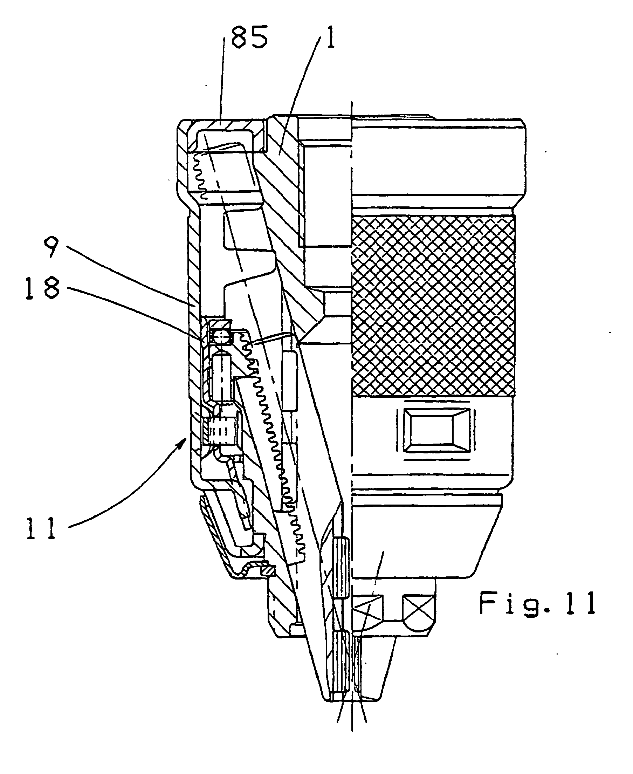

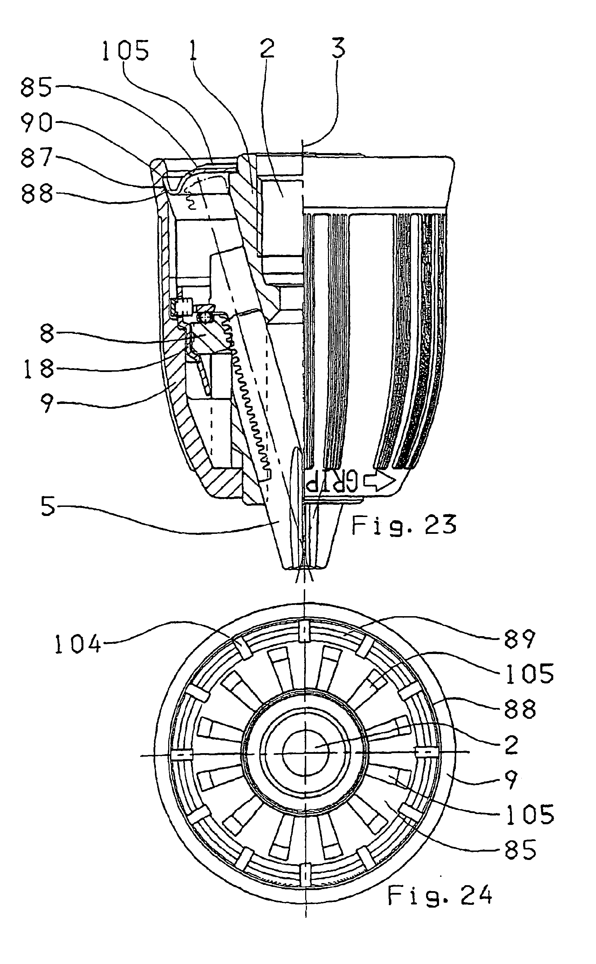

In den Ausführungsbeispielen wird die in axialer Richtung ungeteilt ausgebildete Spannhülse 9 axial von vorn her über den Futterkörper 1 auf den am Futterkörper 1 fertig montierten Gewindering 8 aufgeschoben werden, worauf die Spannhülse 9 in ihrer aufgeschobenen Endlage axial gesichert wird. Die Sicherung der Spannhülse 9 gegen axiale Verschiebungen erfolgt im Bereich axial hinter dem Gewindering 8 am Futterkörper 1 an einer mit dem Futterkörper 1 verbundenen Abschlußscheibe 85, die auch zur radialen Führung der Spannhülse 9 im Bereich ihres rückwärtigen Ringendes beiträgt. Im einzelnen sind an der Abschlußscheibe 85 sich in Umfangsrichtung erstreckende, radial federnde Zungen 86 ausgebildet (Fig. 1 und 8) zum Eingriff in eine an der Spannhülse 9 ausgebildeten Nut 87. Bei der Ausführungsform nach Fig. 9 und 10 ist an der Abschlußscheibe 85 ein Scheibenbund 88 angeformt, der zum Erzielen einer radialen Federwirkung durch Bundsegmente 89 gebildet ist, die ein Einführen von deren radial nach außen gekrümmten Enden 90 in die Nut 87 ermöglicht. Fig. 11 zeigt einen zwischen Abschlußscheibe 85 und Spannhülse 9 ausgebildeten Preßsitz, zu dessen Realisierung das axial rückwärtige Ende der Spannhülse 9 eingebördelt ist. In der Abschlußscheibe 85 sind weiterhin Öffnungen 104 ausgebildet, die benachbart zu den Bundsegmenten 89 oder den Zungen 86 angeordnet sind und der Abfuhr von Bohrschmutz dienen. In dem Ausführungsbeispiel nach den Fig. 23 und 24 weist die Abschlußscheibe weiterhin Verstärkungsrippen 105 auf, die mittig zu den Bundsegmenten 89 angeordnet sind.

Axial vor der Spannhülse 9 ist ein ihr gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt die Spannhülse 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 die Spannhülse 9 gegen größere axiale Belastung von vorn, so daß die axiale Abstützung der Spannhülse 9 nach hinten entsprechend gering beansprucht wird. Weiterhin ist der Anschlagring 50 als Kappe 51 bzw Staubschutzkappe nutzbar, die die Steuerkurve 35 überdeckt.

Für die Anschläge 16', 16" zur Drehbegrenzung zwischen der Spannhülse 9 und dem Gewindering 8 sind in den Ausführungsbeispielen allgemein mit 29 bezeichnete Anschlagstücke und eine das Anschlagstück 29 aufnehmende Aussparung 30 vorgesehen, wobei das Anschlagstück 29 an den Enden des Drehwegs jeweils mit einer der die Aussparung 30 in Umfangsrichtung begrenzenden beiden Stirnflächen 16', 16" zum Anschlag kommt. In den Ausführungsbeispielen sind jeweils drei solche gleichmäßig über den Futterumfang verteilt angeordnete Anschlagstücke 29 bzw. Aussparungen 30 vorhanden. Im einzelnen können die Anschlagstücke 29 als Wandstücke des Zwischenrings 18 ausgebildet sein, die vom vorderen Rand des Zwischenrings 18 axial nach vorn in die auf der Wandinnenseite der Spannhülse 9 ausgebildeten Aussparungen 30 vorstehen.

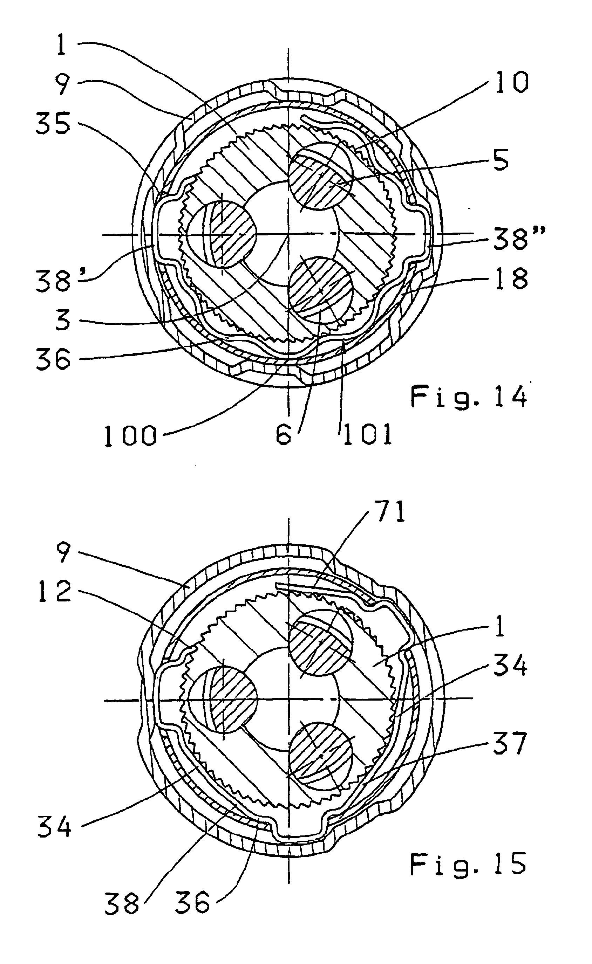

Der Federbügel 38 bildet einen sich in Umfangsrichtung erstreckenden Federarm 36, der am freien Armende das Sperrglied 12 aufweist. Um bei lang ausgedehntem Federarm 36 eine zu weiche Federcharakteristik zu vermeiden, ist bei dem Bohrfutter gemäß Fig. 14 ein durch eine Wellenstruktur 100 gebildetes Dämpfungsglied 101 realisiert. Im eingerückten Zustand des Sperrglieds 12 liegt der Federarm 36 an der Steuerkurve 35 in einem Abstand vom Sperrglied 12 an, der das Durchfedern des Federarms 35 an der Stelle des Sperrglieds 12 um mindestens dessen Eingriffstiefe in die Sperrausnehmungen 10 ermöglicht, so daß beim Festziehen des Futters das Sperrglied 12 über den Kranz der Sperrausnehmungen 10 hinwegrutschen kann. Am Federbügel 38 sind zwei in Umfangsrichtung in gegenseitigem Abstand befindliche Vorsprünge 38', 38" vorgesehen. Von diesen bildet der sperrgliedseitige Vorsprung 38' die Anlage des Federarms 36 an der Steuerkurve 35, der andere Vorsprung 38" das Rastglied 38" bzw den Rastnocken 38" der Rasteinrichtung 17. Die Vorsprünge 38', 38" sind jeweils in Form von Auswölbungen an den Federbügel 38 angebogen.

Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen die Federstege 34 des Federbügels 38 federnd am Kranz der Sperrausnehmungen 10 an, so daß sich der Federbügel 38 in seiner Lage im Zwischenring 18 selbsttätig justiert. In diesem Sinne günstig erweist sich auch ein Federschenkel 71, den der Federbügel 38 mit seinem dem Vorsprung 38" abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Gewindering 8 bzw. Zwischenring 18 und Spannhülse 9 gedämpft werden.

In den Ausführungsbeispielen sind die Anschläge 16', 16", die Sperreinrichtung 11 und die Rasteinrichtung 17 axial vor dem Spanngewinde angeordnet. Selbstverständlich liegt es im Rahmen der Erfindung, diese Teile, zumindest einige davon, axial hinter dem Spanngewinde vorzusehen, wobei sich insbesondere der körperfeste Druckring 21 dazu anbietet, mit den Sperrausnehmungen 10 versehen zu werden.

Im folgenden wird die Funktionsweise des erfindungsgemäßen Bohrfutters anhand des Ausführungsbeispiels nach den Fig. 1 bis 3 kurz erläutert:

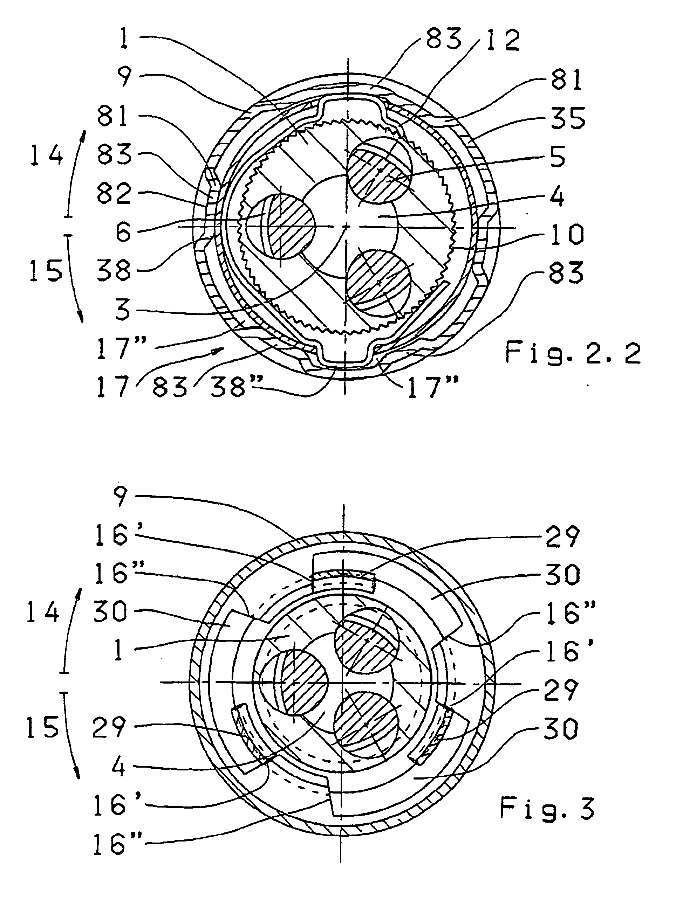

Die Fig. 1 und 2.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17" greifende Rastvorsprung 38" sichert den Zwischenring 18 und die Spannhülse 9 gegen Verdrehungen gegeneinander, so daß beim Drehen der Spannhülse 9 über den Zwischenring 18 der Gewindering 8 relativ zum Futterkörper 1 frei verdreht werden kann, solange das Bohrfutter offen ist. Befindet sich in der Werkzeugaufnahme 4 des Bohrfutters ein Bohrerschaft und wird die Spannhülse 9 in Richtung des Pfeils 15, also im Sinne eines Schließens des Futters verdreht, erfolgt zunächst eine Mitnahme des Gewinderings 8 in der schon beschriebenen Weise, bis die Spannbacken 5 am Werkzeugschaft zur Anlage kommen. Eine weitere Mitnahme des Gewinderings 8 durch die Spannhülse 9 ist dann nicht mehr möglich, so daß sich die Spannhülse 9 unter Überwindung der Rasteinrichtung 17 in die in Fig. 2.2 gezeigte Stellung gegenüber dem Zwischenring 18 verstellt. In dieser Stellung drückt die Spannhülse 9 über die Steuerkurve 35 den Federarm 36 radial nach innen und damit das Sperrglied 12 in den eingerückten Zustand an den Sperrausnehmungen 10. Damit ist der Gewindering 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich die Spannhülse 9 relativ zum Futterkörper 1 in Richtung des Pfeiles 15 verdreht werden, wobei nun die Spannhülse 9 über die Anschläge 16" den Zwischenring 18 und damit den Gewindering 8 in Richtung des Pfeiles 15 festzieht. Zum Lösen und Öffnen des gespannten Futters (Fig. 2.2) wird zunächst die Spannhülse 9 in Richtung des Pfeiles 14 verdreht, wobei zunächst wieder die Rasteinrichtung 17 verstellt wird und sich die Anschlagstücke 29 in den Aussparungen 30 wieder verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen der Spannhülse 9 wird über die Anschläge 16' der Gewindering 18 mitgenommen, wodurch das Bohrfutter gelöst und geöffnet wird. Im Ergebnis ist zur Handhabung des erfindungsgemäßen Bohrfutters nur die drehende Betätigung der Spannhülse 9 gegenüber dem Futterkörper 1 erforderlich, was nur eine Hand erfordert, wenn der Futterkörper 1 über die Bohrspindel gehalten oder umgekehrt die Spannhülse 9 von Hand festgehalten und der Futterkörper 1 durch die Bohrspindel gedreht wird. Die Spannhülse 9 kann sich daher axial über praktisch die ganze Länge des Bohrfutters bis zum axial hinteren Futterende erstrecken und dabei die einzige von außen der Hand zugängliche Futterhandhabe bilden. Nur wenn dennoch gewünscht wird, den Futterkörper 1 auch unabhängig von der Bohrspindel manipulieren zu können, empfiehlt es sich, die Abschlußscheibe 85 in Form eines Halterings 40 für den Futterkörper 1 auszubilden, wobei dann der Haltering 40 drehfest mit dem Futterkörper 1 verbunden sein muß.

Um in einfacher und kostengünstiger Weise die zur Verstellung des Sperrgliedes 12 notwendige Steuerkurve 35 in der Spannhülse 9 ausbilden zu können, wird diese durch mindestens einen radial von außen gegen die Spannhülse 9 gepreßten Stempel gefertigt, wobei sich mindestens eine Tasche 17 ausbildet, die vier Stege 81 aufweist, die von der radial äußeren Seite der Spannhülse 9 nach innen vorstehen und durch eine Bodenplatte 82 verbunden sind.

Bei der Fertigung der Spannhülse 9 wird zum Schutz von deren Form in die hohle Spannhülse 9 ein zur Anlage am Innenumfang der Spannhülse 9 kommender zylindrischer Stab eingeführt und radial von außen nach innen der Stempel gegen die Spannhülse 9 gepreßt, der die Tasche 83 formt. Um dabei einen möglichst weitgehenden Schutz der ursprünglichen Hülseform zu erzielen, wird der Stab axial bis über die einzuprägende Tasche 83 hinaus eingeführt und dann erst radial bis zur Anlage an den Innenumfang aufgeweitet, wobei in dem Stab Aufnahmen ausgebildet sind, die die Form der zu formenden Taschen 83 aufweisen und als Matrize wirken, in die der Stempel das Material der Spannhülse 9 einformt. Nach Ausbildung der Taschen 83 kann der Stab wieder verengt und aus der Spannhülse 9 entfernt werden. Da die in Umfangsrichtung liegenden Stege 81 der Tasche 83 zur Verstellung genutzt werden, ist es gleichfalls möglich, daß zur Ausbildung der als in axialer Richtung orientierten Nut 83' ausgebildeten Tasche 83 der Stempel axial gegen die Spannhülse 9 gepreßt wird.

## Patentansprüche

1. Bohrfutter mit einem an eine Bohrspindel anschließbaren Futterkörper (1), mit zwischen sich eine Aufnahme für das Bohrwerkzeug bildenden Spannbacken (5), die in geneigt zur Futterachse (3) verlaufenden Führungsaufnahmen zum Öffnen und Schließen des Bohrfutters durch einen am Futterkörper (1) drehbar und axial unverschiebbar geführten Gewindering (8) verstellbar sind, und mit einer der Verstellung der Spannbacken (5) durch Verdrehung des Gewinderings (8) dienenden Spannhülse (9), **dadurch gekennzeichnet, dass** die Spannhülse (9) im Bereich axial hinter dem Gewindering (8), also auf der der Bohrspindel zugewandten Seite, an einer mit dem Futterkörper (1) verbundenen, eine Federwirkung vermittelnden Abschlussscheibe (85) axial gesichert ist wobei die Abschlußscheibe (85) als Abschluss der Spannhülse (9) angeordnet ist.

2. Bohrfutter nach Anspruch 1, **dadurch gekennzeichnet, dass** die Abschlussscheibe (85) im Bereich des rückwärtigen Ringendes der Spannhülse (9) in eine an der Spannhülse (9) ausgebildeten Nut (87) eingreift.

3. Bohrfutter nach Anspruch 1 oder 2, **dadurch gekennzeichnet, dass** die Spannhülse (9) den Futterkörper (1) bis zu dessen rückwärtigem Ende überdeckt, und dass die Abschlussscheibe (85) am rückwärtigen Ende des Futterkörpers (1) fixiert ist.

4. Bohrfutter nach einem der Ansprüche 1 bis 3, **dadurch gekennzeichnet, dass** an der Abschlussscheibe (85) ein Scheibenbund (88) angeformt ist.

5. Bohrfutter nach Anspruch 4, **dadurch gekennzeichnet, dass** der Scheibenbund (88) durch Bundsegmente (89) gebildet ist.

6. Bohrfutter nach einem der Ansprüche 2 bis 5, **dadurch gekennzeichnet, dass** an der Abschlussscheibe (85) radial federnde Zungen (86) ausgebildet sind zum Eingriff in die an der Spannhülse (9) ausgebildeten Nut (87).

7. Bohrfutter nach einem der Ansprüche 1 bis 6, **dadurch gekennzeichnet, dass** in der Abschlussscheibe (85) Öffnungen (104) ausgebildet sind.

8. Bohrfutter nach Anspruch 7, **dadurch gekennzeichnet, dass** die Öffnungen (104) radial benachbart zu den Bundsegmenten (89) angeordnet sind.

9. Bohrfutter nach Anspruch 7, **dadurch gekennzeichnet, dass** die Öffnungen (104) benachbart zu den Zungen (86) angeordnet sind.

10. Bohrfutter nach einem der Ansprüche 1 bis 9, **dadurch gekennzeichnet, dass** die Spannhülse (9) eine Steuerkurve (35) zur Betätigung einer die Verdrehung des Gewinderinges (8) verhindernden bzw. freigebenden Sperreinrichtung (11) aufweist.

11. Bohrfutter nach Anspruch 10, **dadurch gekennzeichnet, dass** die Steuerkurve (35) durch Stege (81) gebildet ist, die von der radial äußeren Seite der aus Metall bestehenden Spannhülse (9) nach innen vorstehen.

12. Bohrfutter nach Anspruch 11, **dadurch gekennzeichnet, dass** die Stege (81) durch die Seitenwände mindestens einer in die Spannhülse (9) eingeprägten Tasche (83) gebildet sind.

13. Bohrfutter nach Anspruch 11 oder 12, **dadurch gekennzeichnet, dass** die in Umfangsrichtung der Spannhülse (9) einander gegenüberliegenden Stege (81) der Tasche (83) zur Betätigung der Sperreinrichtung (11) vorgesehen sind.

14. Bohrfutter nach einem der Ansprüche 10 bis 13, **dadurch gekennzeichnet, dass** die Steuerkurve (35) durch eine Kappe (51) überdeckt ist.

15. Bohrfutter nach Anspruch 14, **dadurch gekennzeichnet, dass** die Kappe (51) durch eine axial am Futterkörper (1) abgestützte Staubschutzkappe gebildet ist.

16. Bohrfutter nach einem der Ansprüche 10 bis 15, **dadurch gekennzeichnet, dass** die Sperreinrichtung (11) aus einem koaxialen kranz von Sperrausnehmungen (10) und aus mindestens einem Sperrglied (12) besteht, das unter der Kraft einer Sperrfeder durch die Steuerkurve (35) in die Sperrausnehmungen (10) einrückbar ist, wobei das Sperrglied (12) und die Sperrausnehmungen (10) einander in derart geneigten Flankenflächen anliegen, dass diese den Gewindering (8) in der dem Öffnen des Bohrfutters entsprechenden Drehrichtung gegen Verdrehen sperren und beim Verdrehen in der anderen Drehrichtung das Sperrglied gegen die Kraft der Sperrfeder aus den Sperrausnehmungen (10) herausdrücken, und dass durch eine der in die Spannhülse (9) eingeprägten Taschen (83) ein Schaltnocken (84) zur Federspannung gegeben ist.

17. Bohrfutter nach Anspruch 16, **dadurch gekennzeichnet, dass** der Gewindering (8) drehfest mit einem koaxialen Zwischenring (18) verbunden ist, der die Sperrfeder und das Sperrglied (12) trägt, und dass der Zwischenring (18) durch Anschläge (16',16") begrenzt relativ zur Spannhülse (9) verdrehbar ist.

18. Bohrfutter nach Anspruch 16 oder 17, **dadurch gekennzeichnet, dass** eine in Umfangsrichtung zwei Raststellungen aufweisende Rasteinrichtung (17) vorgesehen ist, wobei sich das durch einen Rastnocken einer Rastfeder gebildete Rastglied (38") bei dem in die Sperrausnehmungen (10) eingerückten Sperrglied (12) in der einen Raststellung (17') und bei dem ausgerückten Sperrglied (12) in der anderen Raststellung (17") befindet, und dass die Steuerkurve (35) die beiden Raststellungen (17',17") beinhaltet.

19. Bohrfutter nach Anspruch 18, **dadurch gekennzeichnet, dass** an der Sperrfeder zwei zum simultanen Eingriff in die Randverzahnung zur gemeinsamen Kraftübertragung vorgesehenen Sperrglieder (12) ausgebildet sind, denen jeweils eine Tasche (83) als Schaltnocken (84) zugeordnet ist.

20. Bohrfutter nach Anspruch 19, **dadurch gekennzeichnet, dass** die Sperrfeder mit einem die Ausrichtung der Sperrglieder (12) gegenüber der Sperrausnehmung (10) ermöglichenden Spiel im Zwischenring (18) angeordnet ist.

21. Bohrfutter nach Anspruch 19, **dadurch gekennzeichnet, dass** die beiden Sperrglieder (12) an den Enden der Sperrfeder angeordnet sind, dass das in der dem Öffnen des Bohrfutter entsprechenden Drehrichtung vorn liegende Sperrglied (12) in Richtung Sperrausnehmungen (10) abgekröpft ist, und dass das andere Sperrglied (12) schleifenförmig gestaltet ist zur Einwirkung auf die zum vorderen Sperrglied (12) übereinstimmende Flankenfläche.

22. Bohrfutter nach einem der Ansprüche 1 bis 21, **dadurch gekennzeichnet, dass** die Abschlussscheibe (85) auf ihrer Planseite Verstärkungsrippen (105) aufweist.

23. Bohrfutter nach Anspruch 22, **dadurch gekennzeichnet, dass** die Verstärkungsrippen (105) mittig innerhalb der Bundsegmente (89) angeordnet sind.

## Claims

1. A drilling chuck comprising a chuck body (1) which can be connected to a drilling spindle, clamping jaws (5) which form between them a receiving means for the drilling tool and which are displaceable in guide receiving means extending inclinedly with respect to the chuck axis (3) for opening and closing the drilling chuck, by a screwthreaded ring (8) which is guided rotatably and axially immovably on the chuck body (1), and a clamping sleeve (9) serving for displacement of the clamping jaws (5) by rotation of the screwthreaded ring (8), **characterised in that** in the region axially behind the screwthreaded ring (8), that is to say on the side towards the drilling spindle, the clamping sleeve (9) is axially secured to a closure disc (85) which is connected to the chuck body (1) and which provides a spring action, wherein the closure disc (85) is arranged as a closure of the clamping sleeve (9).

2. A drilling chuck according to claim 1 **characterised in that** in the region of the rearward annular end of the clamping sleeve (9) the closure disc (85) engages into a groove (87) on the clamping sleeve (9).

3. A drilling chuck according to claim 1 or claim 2 **characterised in that** the clamping sleeve (9) covers over the chuck body (1) as far as the rearward end thereof and that the closure disk (85) is fixed to the rearward end of the chuck body (1).

4. A drilling chuck according to one of claims 1 to 3 **characterised in that** a disc flange (88) is formed on the closure disc (85).

5. A drilling chuck according to claim 4 **characterised in that** the disc

6. A drilling chuck according to one of claims 2 to 5 **characterised in that** radially resilient tongues (86) are provided on the closure disc (85), for engagement into the groove (87) on the clamping sleeve (9).

7. A drilling chuck according to one of claims 1 to 6 **characterised in that** openings (104) are provided in the closure disc (85).

8. A drilling chuck according to claim 7 **characterised in that** the openings (104) are arranged radially adjacent to the flange segments (89).

9. A drilling chuck according to claim 7 **characterised in that** the openings (104) are arranged adjacent to the tongues (86).

10. A drilling chuck according to one of claims 1 to 9 **characterised in that** the clamping sleeve (9) has a control cam (35) for actuation of a locking device (11) for preventing or enabling rotation of the screwthreaded ring (8).

11. A drilling chuck according to claim 10 **characterised in that** the control cam (35) is formed by limbs (81) which project inwardly from the radially outward side of the clamping sleeve (9) which comprises metal.

12. A drilling chuck according to claim 11 **characterised in that** the limbs (81) are formed by the side walls of at least one pocket (83) which is impressed into the clamping sleeve (9).

13. A drilling chuck according to claim 11 or claim 12 **characterised in that** the limbs (81) of the pocket (83), which limbs are in mutually opposite relationship in the peripheral direction of the clamping sleeve (9), are provided for actuation of the locking device (11).

14. A drilling chuck according to one of claims 10 to 13 **characterised in that** the control cam (35) is covered over by a cap (51).

15. A drilling chuck according to claim 14 **characterised in that** the cap (41) is formed by a dust protection cap supported axially an the chuck body (1).

16. A drilling chuck according to one of claims 10 to 15 **characterised in that** the locking device (11) comprises a coaxial ring of locking recesses (10) and at least one locking member (12) which can be engaged into the locking recesses (10) under the force of a locking spring by the control cam (35), wherein the locking member (12) and the locking recesses (10) bear against each other at flank surfaces inclined in such a way that they lock the screwthreaded ring (8) to prevent rotation in the direction of rotation corresponding to opening of the drilling chuck and upon rotation in the other direction of rotation they urge the locking member against the force of the locking spring out of the locking recesses (10), and that a switching projection (84) is provided by one of the pockets (83) impressed into the clamping sleeve (9), for spring stressing purposes.

17. A drilling chuck according to claim 16 **characterised in that** the screwthreaded ring (8) is non-rotatably connected to a coaxial intermediate ring (18) which carries the locking spring and the locking member (12) and that the intermediate ring (18) is rotatable relative to the clamping sleeve (9) limitedly by abutments (16', 16").

18. A drilling chuck according to claim 16 or claim 17 **characterised in that** there is provided a latching device (17) having two latching positions in the peripheral direction, wherein the latching member (38') formed by a latching projection of a latching spring is in the one latching position (17') when the locking member (12) is engaged into the locking recesses (10) and is in the other latching position (17") when the locking member (12) is disengaged, and that the control cam (35) includes the two latching positions (17', 17").

19. A drilling chuck according to claim 18 **characterised in that** provided on the locking spring are two locking members (12) for simultaneous engagement into the edge tooth arrangement for joint force transmission, a respective pocket (83) being associated as a switching projection (84) with each locking member.

20. A drilling chuck according to claim 19 **characterised in that** the locking spring is arranged in the intermediate ring (18) with a play permitting alignment of the locking members (12) with respect to the locking recess (10).

21. A drilling chuck according to claim 19 **characterised in that** the two locking members (12) are arranged at the ends of the locking spring, that the locking member (12) which leads in the direction of rotation corresponding to opening of the drilling chuck is offset in the direction of the locking recesses (10) and that the other locking member (12) is of a loop-shaped configuration for acting on the flank surface which is coincident with respect to the front locking member (12).

22. A drilling chuck according to one of claims 1 to 21 **characterised in that** the closure disc (85) has reinforcing ribs (105) on its flat side.

23. A drilling chuck according to claim 22 **characterised in that** the reinforcing ribs (105) are arranged centrally within the flange segments (89).

## Revendications

1. Mandrin de perçage comportant un corps de mandrin (1), qui peut être connecte à une broche de perçage, des mors de serrage (5), qui définissent entre eux un logement pour l'outil de perçage et peuvent être déplacés dans des glissières de guidage inclinées en direction de l'axe de mandrin (3), à l'aide d'une bague filetée (8) guidée en rotation sur le corps de mandrin (1) mais fixe dans la direction axiale, aux fins d'ouvrir et de fermer le mandrin de perçage, ainsi qu'un manchon de serrage (9) qui sert au déplacement des mors de serrage (5) par rotation de la bague filetée (8), **caractérisé par le fait que** le manchon de serrage (9) dans la zone située axialement derrière la bague filetée (8), c'est-à-dire côté broche de perçage, est solidaire axiale d'une rondelle de fermeture (85) liée au corps de mandrin (1) qui agit en clavette, cependant la rondelle de fermeture (85) est assignée au manchon de serrage (9) comme un bout.

2. Mandrin de perçage selon la revendication 1, **caractérisé par le fait que** la rondelle de fermeture (85) dans la région de l'extrémité arri_re annulaire du manchon de serrage (9) s'engage dans une gorge (87) aménagée dans le manchon de serrage (9).

3. Mandrin de perçage selon la revendication 1 ou 2, **caractérisé par le fait que** le manchon de serrage (9) recouvre le corps de mandrin (1) jusqu'à l'extrémité arrière de celui-ci et que la rondelle de fermeture (85) est fixée à l'extrémité arrière du corpus de mandrin (1).

4. Mandrin de perçage selon une des revendications 1 à 3, **caractérisé par le fait qu'**un collet (88) est aménagé sur la rondelle de fermeture (85).

5. Mandrin de perçage selon la revendication 4, **caractérisé par le fait que** le collet (88) de la rondelle est formé de segments de collet (89).

6. Mandrin de perçage selon une des revendications 2 à 5. **caractérisé par le fait que** des languettes (86) élastiques dans la direction radiale, destinées à pénétrer dans la rainure prévue dans le manchon de serrage (9), sont aménagées dans la rondelle de fermeture (85).

7. Mandrin de perçage selon une des revendications 1 à 6, **caractérisé par le fait que** des ouvertures (104) sont aménagées dans la rondelle de fermeture (85).

8. Mandrin de perçage selon la revendication 7, **caractérisé par le fait que** les ouvertures (104) sont disposées radialement dans le voisinage des segments de collet (89).

9. Mandrin de perçage selon la revendication 7, **caractérisé par le fait que** les ouvertures (104) sont disposées dans le voisinage des languettes (86).

10. Mandrin de perçage selon une des revendications 1 à 9, **caractérisé par le fait que** le manchon de serrage (9) présente une came de commande (35) pour l'actionnement d'un dispositif de verrouillage (11) qui empêche ou libère la rotation de la bague filetée (8).

11. Mandrin de perçage selon la revendication 10, **caractérisé par le fait que** la came de commande (35) est formée de cloisons (81) qui font saillie vers l'intérieur depuis la face extérieure du manchon de serrage (9) métallique.

12. Mandrin de perçage selon la revendication 11, **caractérisé par le fait que** les cloisons (81) sont formées par les parois latérales d'au moins une poche (83) matricée dans le manchon de serrage (9).

13. Mandrin de perçage selon la revendication 11 ou 12, **caractérisé par le fait que** les cloisons (81) de la poche (83) mutuellement en vis-à-vis dans la direction périphérique du manchon de serrage (9) sont prévues pour l'actionnement du dispositif de verrouillage (11).

14. Mandrin de perçage selon une des revendications 10 à 13, **caractérisé par le fait que** la came de commande (35) est couverte par une coiffe (51).

15. Mandrin de perçage selon la revendication 14, **caractérisé par le fait que** la coiffe (51 est formée d'une coiffe anti-poussière qui repose axialement sur le corps de mandrin (1).

16. Mandrin de perçage selon une des revendications 10 à 15, **caractérisé par le fait que** le dispositif de verrouillage (11) se compose d'une couronne coaxiale d'échancrures de verrouillage (10) et d'au moins un organe de verrouillage (12) qui, sous la force d'un ressort de verrouillage est repoussé par la came de commande (35) dans les échancrures de verrouillage (10), l'organe de verrouillage (12) et les échancrures de verrouillage (10) étant en contact réciproque par des surfaces de flancs dotées d'une inclinaison telle que lesdites surfaces de flancs bloquent la bague filetée (8) dans le sens de rotation qui correspond à l'ouverture du mandrin de perçage et lors de la rotation dans le sens opposé repoussent l'organe de verrouillage hors des échancrures de verrouillage (10), à l'encontre de la force du ressort de verrouillage, et **par le fait qu'**une came de commande (84) est formée par une poche (83) matricée dans le manchon de serrage (9).

17. Mandrin de serrage selon la revendication 16, **caractérisé par le fait que** la bague filetée (8) est solidaire en rotation d'une bague intermédiaire (18) coaxiale qui porte le ressort de verrouillage et l'organe de verrouillage (12) et **par le fait que** la bague intermédiaire (8) peut tourner par rapport au manchon de serrage (9) en étant limitée par des butées (16', 16").

18. Mandrin de serrage selon la revendication 16 ou 17, **caractérisé par le fait qu'**il est prévu un système de cliquet (17) à deux positions d'encliquetage dans la direction périphérique, l'élément formant cliquet (38"), qui est constitué d'une saillie d'encliquetage sur un ressort d'encliquetage, se trouvant dans l'une des positions d'encliquetage (17') lorsque l'organe de verrouillage (12) est engagé dans l'une des échancrures de verrouillage (10) et dans l'autre position d'encliquetage (17") lorsque l'organe de verrouillage (12) est sorti et **par le fait que** la came de commande (35) comporte les deux positions d'encliquetage (17', 17").

19. Mandrin de serrage selon la revendication 18, **caractérisé par le fait que** deux organes de verrouillage (12) sont aménagés sur le ressort de verrouillage, ressorts qui viennent en prise simultanément avec la couronne dentée aux fins de transmettre conjointement les efforts et auxquels est associée une poche (83) en tant que came de commande (84).

20. Mandrin de serrage selon la revendication 19, **caractérisé par le fait que** le ressort de verrouillage est monté dans la bague intermédiaire (18) avec un jeu qui permet un alignement des organes de verrouillage (12) par rapport à l'échancrure (10).

21. Mandrin de serrage selon la revendication 19, **caractérisé par le fait que** les deux organes de verrouillage (12) sont disposés aux extrémités du ressort de verrouillage, **par le fait que** l'organe de verrouillage (12) situé devant dans le sens de rotation qui correspond à l'ouverture du mandrin de perçage est recourbé en direction des échancrures de verrouillage (10) et **par le fait que** l'autre organe de verrouillage (12) est conformé en boucle pour agir sur la surface de flanc qui correspond à l'organe de verrouillage (12) antérieur.

22. Mandrin de serrage selon une des revendications 1 à 21, **caractérisé par le fait que** la rondelle de fermeture (85), sur sa face plane, présente des nervures de renfort (105).

23. Mandrin de serrage selon la revendication 22, **caractérisé par le fait que** les nervures de renfort (105) sont disposées au centre à l'intérieur des segments de collet (89).
